# EUROPEAN PATENT APPLICATION

(11) **EP 3 010 125 A2**
(43) Date of publication of application: **20.04.2016**
(21) Application number: 15190098.2
(22) Date of filing: 16.10.2015
(51) Int. Cl.: H02K 16/00

(54) **DUAL FREQUENCY ELECTRICAL GENERATORS**

(30) Priority: 17.10.2014 US 201414517052
(71) Applicant: Hamilton Sundstrand Corporation, Charlotte, NC 28217 (US)
(72) Inventor: FRANZEN, Mark F., Brodhead, WI 53520 (US); SHAHAMAT, Mohammad, Rockton, IL 61072 (US)
(74) Representative: Iceton, Greg James

(57) **Abstract**

A power conversion apparatus includes a first electrical machine (140) and a second electrical machine (160). The first electrical machine includes a first rotor portion (142) and a first stator portion (144) electromagnetically coupled to the first rotor portion (142). The second electrical machine (160) includes a second rotor portion (162) and a second stator portion (164) electromagnetically coupled to the second rotor portion (162). The first rotor portion (142) is connected to the second rotor portion (162) at shared axial position for common rotation therewith about a rotational axis of the power conversion apparatus.

## Description

### BACKGROUND OF THE INVENTION

### 1. Field of the Invention

The present disclosure relates to electrical machines, and more particularly to electrical generators.

### 2. Description of Related Art

Vehicles commonly include electrical generators for powering onboard power-consuming devices. Such generators typically include a rotor portion coupled to a stator portion by a magnetic field. Rotation of the rotor portion typically alters the magnetic field as observed at a fixed point in the stator such that change in the magnetic field induces voltage differential across windings disposed in the generator. A vehicle power system harvests the power, manipulates the power such that it has suitable voltage and frequency, and supplies the power to the vehicle power-consuming devices.

Some vehicles have power-consuming devices requiring power with different frequencies. For example, some power-consuming devices may require alternating current (AC) power at 50-hertz or 60-hertz, and others may require AC power with a higher frequency. Such vehicles typically include two or more generators, each configured to generate AC power with a different frequency. Another approach is to include a power converter with solid-state circuitry configured to receive AC power at a first frequency unsuitable for some vehicle power-consuming devices, and covert the power to a second frequency suitable for those devices.

Such conventional methods and systems have generally been considered satisfactory for their intended purpose. However, there is still a need in the art for improved systems for providing power to power consuming devices requiring different frequencies. The present disclosure provides a solution for this need.

### SUMMARY OF THE INVENTION

A power conversion apparatus includes a first electrical machine and a second electrical machine. The first electrical machine includes a first rotor portion and a first stator portion electromagnetically coupled to the first rotor portion. The second electrical machine includes a second rotor portion and a second stator portion electromagnetically coupled to the second rotor portion. The first rotor portion is connected to the second rotor portion at shared axial position for common rotation therewith about a rotational axis of the power conversion apparatus.

In certain embodiments, the power conversion apparatus includes a rotor with a dogleg radial profile supporting the first rotor portion and the second rotor portion. The rotor can include an on-axis segment extending along the rotational axis of the apparatus, an off-axis segment, and an angled segment coupling the on-axis segment with the off-axis segment. The off-axis segment can have a radially inner surface and a radially outer surface, the first rotor portion being disposed over the radially inner surface and the second rotor portion being disposed over the radially outer surface. The off-axis segment can also include a backiron portion completing the magnetic circuits of the respective first electrical machine and the second electrical machine.

In accordance with certain embodiments, the first rotor portion includes a first plurality of permanent magnet elements and the second rotor portion includes a second plurality of magnet elements. A first alternating current power lead can be connected to the first stator portion and a second alternating current power lead can be connected to the second stator portion. The first stator portion can include at least one winding electrically connected to the first alternating current lead and disposed radially inward of the first rotor portion. The second stator portion can include at least one winding electrically connected to the second alternating current lead and disposed radially outward from the second rotor portion and first electrical machine. It is contemplated that the second plurality of permanent magnet elements can have a greater number of permanent magnet elements than the first plurality of permanent magnet elements for simultaneously supplying alternating current power to the first and second alternating current leads with different respective frequencies.

It is also contemplated that in certain embodiments the power conversion apparatus can include a stator support structure. The stator support structure can have a radially outer surface facing a radially inner surface, the first stator portion can be disposed over the radially outer surface and the second stator portion can be disposed over the radially inner surface. The first stator portion and the first rotor portion can define a first gap therebetween, and the first stator and rotor portions can define a first magnetic circuit traversing the first gap. The second stator portion and the second rotor portion can define a second gap therebetween, and the second stator and rotor portions can define a second magnetic circuit traversing the second gap. The second electrical machine can be radially offset from and axially overlap the first electrical machine such that the second gap axially overlays at least a portion of the first gap. Respective axial lengths of the first and second gaps can be equal or unequal, a length of the second gap being greater than a length of the first gap for example.

A dual-frequency generator includes a first electrical machine disposed about a rotational axis and a second electrical machine disposed radially outward of the first electrical machine in relation to the rotational axis. The first electrical machine includes a first plurality of permanent magnet elements rotatable about the rotational axis, at least one first winding electromagnetically coupled to the first plurality of permanent magnet elements, and a first AC lead electrically connected to the at least one first winding. The second electrical machine includes a second plurality of permanent magnet elements connected to the first plurality of permanent magnet elements, at least one second winding electromagnetically coupled to the second plurality of permanent magnet elements, and a second AC lead connected to the at least one second winding. A number of permanent magnet elements forming the second plurality of permanent magnet elements is typically greater than a number of permanent magnet elements forming the first plurality of permanent magnet elements such that concerted rotation of the first and second plurality of permanent magnet elements about the rotational axis coincidently induces AC voltage in the at least one second winding at a frequency that is greater than that induced in the at least one first AC winding.

These and other features of the systems and methods of the subject disclosure will become more readily apparent to those skilled in the art from the following detailed description of the preferred embodiments taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, preferred embodiments thereof will be described by way of example only and in detail herein below with reference to certain figures, wherein:
Fig. 1 is a schematic view of an exemplary embodiment of a vehicle constructed in accordance with the present disclosure, showing a power conversion apparatus;
Fig. 2 is a schematic, partial cross-sectional view of the power conversion apparatus of Fig. 1, showing two electrical machines axially overlaying one another;
Fig. 3 is a schematic, partial cross-sectional view of another embodiment of a power conversion apparatus, showing simply supported rotary components of the apparatus; and
Fig. 4 is a schematic axial end view of the power conversion apparatus of Fig. 1, showing the electromagnetic coupling and respective pole counts of the first and second electrical machines included in the power conversion apparatus.

### DETAILED DESCRIPTION OF THE PREFERRED EMBODIMENTS

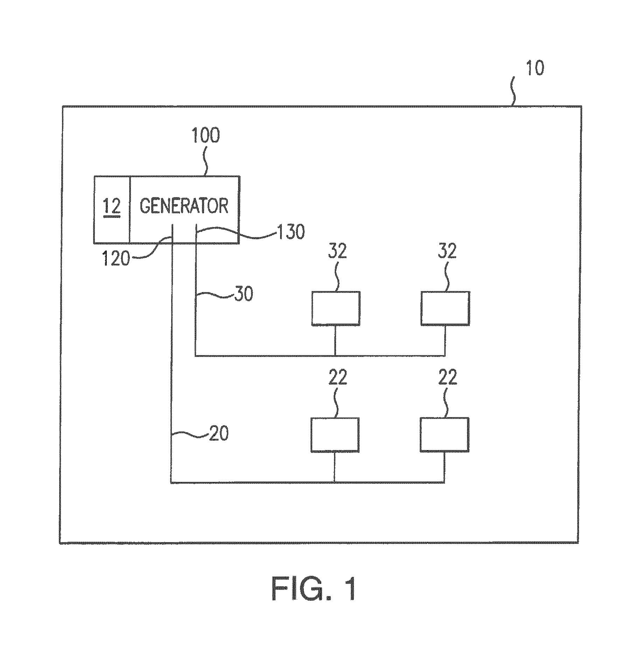

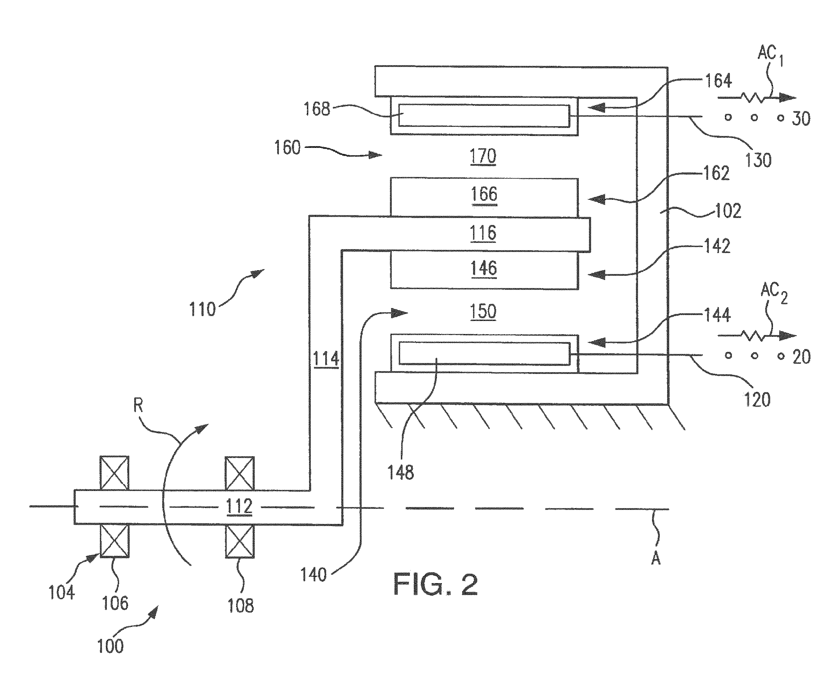

Reference will now be made to the drawings wherein like reference numerals identify similar structural features or aspects of the subject disclosure. For purposes of explanation and illustration, and not limitation, a partial view of an exemplary embodiment of the power conversion apparatus in accordance with the disclosure is shown schematically in Fig. 1 and is designated generally by reference character 100. Other embodiments of the power conversion apparatus in accordance with the disclosure, or aspects thereof, are provided in Figs. 2-4, as will be described. The systems and methods described herein can be used for electrical machines such as generators and motors.

As shown in Fig. 1, a vehicle 10 is shown. Vehicle 10 includes a power conversion apparatus 100, a first alternating current (AC) power bus 20, and a second AC power bus 30. Power conversion apparatus 100 is configured and adapted for converting rotational energy provided by a prime mover 12 into electrical power. Power conversion apparatus 100 generates alternating current (AC) power with two frequencies using a single source of rotation for use by power-consuming devices supplied power by vehicle 10. A first AC lead 120 electrically connects power conversion apparatus 100 with first AC power bus 20. A second AC lead 130 electrically connects power conversion apparatus 100 with second AC power bus 30. First AC power bus 20 includes at least one power-consuming device 22 electrically connected to power conversion apparatus 100 through first AC power bus 20 and first AC lead 120. Second AC power bus 30 includes at least one power-consuming device 32 electrically connected to power conversion apparatus 100 through second AC power bus 30 and second AC lead 130. In embodiments, vehicle 10 is a terrestrial, marine or air vehicle having power-consuming devices requiring at least two different AC power frequencies.

First AC power bus 20 and second AC power bus 30 are both AC power buses. In this respect first AC power bus 20 is configured and adapted to supply AC power having a first frequency received from first AC lead 120 to power-consuming device 22. Second AC power bus 30 is configured and adapted to supply power having a second frequency from second AC lead 130 to power-consuming device 32. The first frequency is different from the second frequency, e.g. the second frequency being greater than the first frequency or vice versa. In certain embodiments, the first frequency of the AC power received from first AC lead 120 is about 50 hertz or about 60 hertz. In certain embodiments, the second frequency of the AC power received from second AC lead 130 is about 400 hertz.

With reference to Fig. 2, power conversion apparatus 100 is shown schematically. Power conversion apparatus 100 includes a stator support structure 102, a rotor 110, a first electrical machine 140, and a second electrical machine 160. Rotor 110 has an on-axis segment 112, an angled segment 114, and an off-axis segment 116 which collectively define the cross-section of a volume of revolution about rotational axis A. On-axis segment 112 extends along rotational axis A. Off-axis segment 116 is radially offset with respect to on-axis segment 112 and is substantially parallel thereto. Angled segment 114 extends between axially adjacent ends of on-axis segment 112 and off-axis segment 116, coupling off-axis segment 116 with on-axis segment 112. As illustrated, angled segment 114 is normal to both on-axis segment 112 and off-axis segment 116. In other embodiments, angled segment 114 can be obliquely disposed between on-axis segment 112 and off-axis segment 116.

A bearing system 104 rotatably supports rotor 110. In the embodiment illustrated in Fig. 2, a first bearing block 106 and a second bearing block 108 rotatably support on-axis segment 112 of rotor 110 such that angled segment 114 and off-axis segment 116 are cantilevered with respect thereto. This permits the construction of power conversion apparatus 100 by mechanically isolating rotary components, e.g. first rotor portion 142 and second rotor portion 162, from static components, e.g. first stator portion 144 and second stator portion 164.

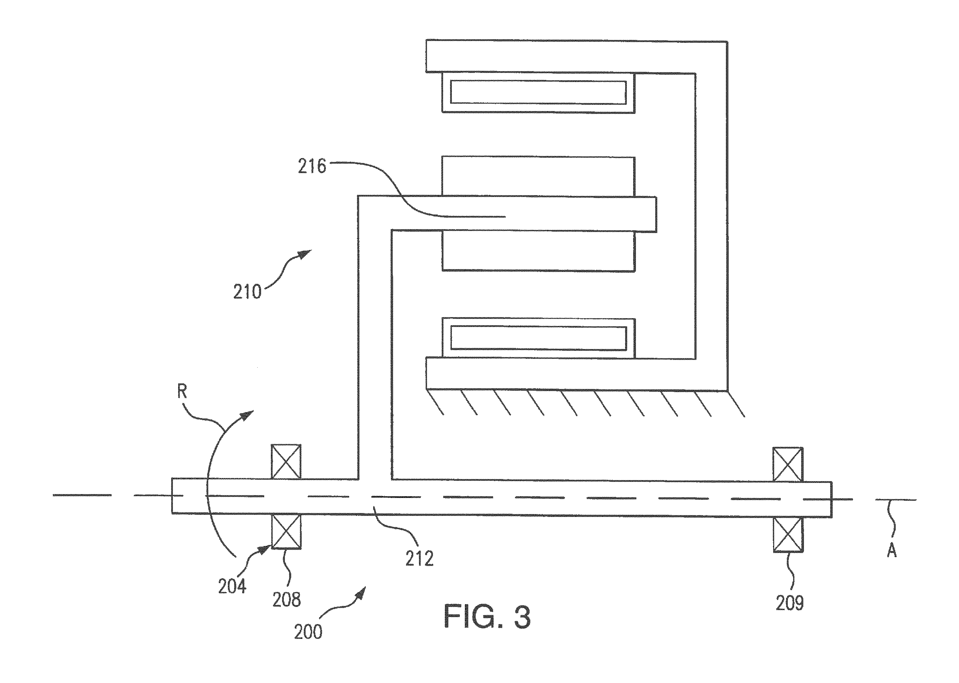

With reference to Fig. 3, another embodiment of a power conversion apparatus 200 is shown. Power conversion apparatus 200 is similar to power conversion apparatus 100, and additionally includes a bearing system 204 with a first bearing block 208, and a second bearing block 209. First bearing block 208 and second bearing block 209 rotatably support an on-axis segment 212 of a rotor 210. This provides a simply supported rotor arrangement, potentially improving the balance and rotor dynamic performance of power conversion apparatus 200. While illustrated as including two bearing blocks, it is to be understood and appreciated that embodiments of power conversion apparatus described herein can include any suitable number of bearing blocks.

With continuing reference to Fig. 2, first electrical machine 140 includes a first rotor portion 142 and a first stator portion 144 radially separated from one another by a first gap 150. First rotor portion 142 includes a first plurality of permanent magnet elements 146 coupled to off-axis segment 116 of rotor 110 along a radially inner surface of off-axis segment 116. First stator portion 144 includes at least one first winding 148 disposed within stator support structure 102 along a radially inner portion of stator support structure 102 facing rotational axis A. The at least one first winding 148 is electromagnetically coupled to the first plurality of permanent magnet elements 146 and is electrically connected to first AC lead 120. This causes passage of the first plurality of permanent magnet elements 146 in relation to the at least one first winding 148 to induce voltage differential across the at least one first winding 148 with a frequency corresponding to the number of poles defined by the first plurality of permanent magnet elements 146 and the rotational speed of rotor 110. First AC lead 120 provides the induced power as a first AC power flow AC₁ to first AC power bus 20 through first AC lead 120 for use by power-consuming device 22 (shown in Fig. 1).

Second electrical machine 160 is radially outward of first electrical machine 140, axially overlaps first electrical machine 140, and includes a second rotor portion 162 and a second stator portion 164. A second gap 170 separates second rotor portion 162 from second stator portion 164. Second rotor portion 162 includes a second plurality of permanent magnet elements 166 coupled to a radially outer surface of off-axis segment 116 configured and adapted for common rotation with the first plurality of permanent magnet elements 146 of first rotor portion 142. Second stator portion 164 includes at least one second winding 168 disposed within a stator support structure 102 along a radially inner surface of stator support structure 102. The at least one second winding 168 is electromagnetically coupled to the second plurality of permanent magnet elements 166 and is electrically connected to second AC lead 130. This causes passage of the second plurality of permanent magnet elements 166 in relation to the at least one second winding 168 to induce voltage differential across the at least one second winding 168 with a frequency corresponding to the number of poles defined by the second plurality of permanent magnet elements 166 and the rotational speed of rotor 110. Second AC lead 130 provides the induced power as a second AC power flow AC₂ to second AC power bus 30 for use by power-consuming device 32 (shown in Fig. 1).

It is to be understood and appreciated that, in embodiments, field cooling is not required because of the absence of field-induced resistance heating typical of wound field devices. In certain embodiments, windings in the stator portion can experience relatively high power density. The nested winding arrangement is amenable to oil cooling, such as oil cooling techniques described in U.S. Patent Application Publication No. 2013/0113311 A1 to Downing et al., the entire contents of which is incorporated herein by reference.

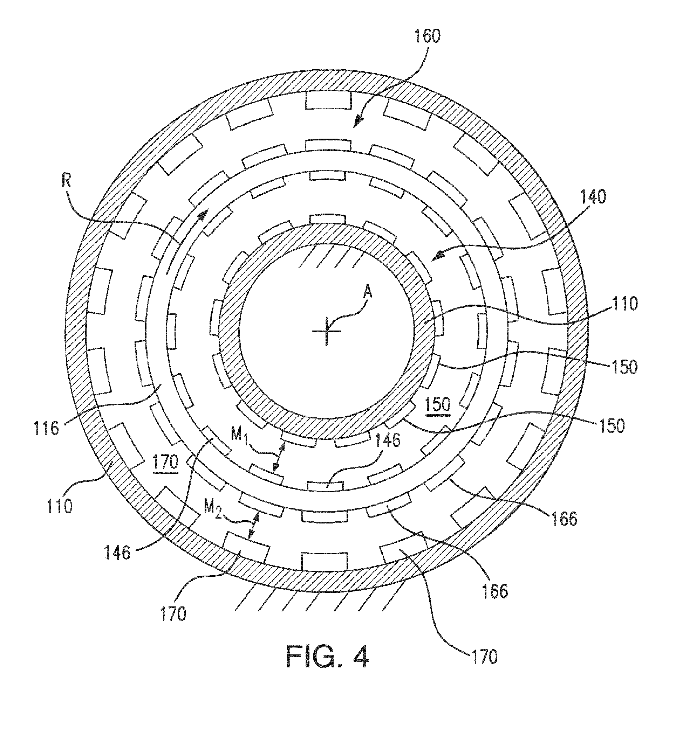

With reference to Fig. 4, power conversion apparatus 100 is shown in an axial end view. Rotary motion of rotor 110 simultaneously rotates the first plurality of permanent magnet elements 146 in relation to the at least one first winding 148 and the second plurality of permanent magnet elements 166 in relation to the at least one second winding 168. A first electromagnetic coupling M₁ between the first plurality of permanent magnet elements 146 and the at least one first winding 148 induces a voltage differential and corresponding first AC power flow AC₁ (shown in Fig. 2) across the at least one first winding 148 with a first electrical frequency. A second electromagnetic coupling M₂ between the second plurality of permanent magnet elements 166 and the at least one second winding 168 induces a voltage differential and corresponding second AC current flow AC₂ (shown in Fig. 2) in the at least one second winding 168 with a second frequency. Off-axis segment 116 can be constructed from material of suitable magnetic permeability so as to form a backiron completing first electromagnetic circuit M₁ and second electromagnetic coupling M₂.

Electrical frequency of both electrical machines is a function of the pole count of the respective electrical machine and rotational speed of the rotor. Pole count in turn is influenced by the number of positive and negative polarity pairings of permanent magnets arranged about the circumference of the respective electrical machine. Since both electrical machine generators rotate in concert with a common rotor, e.g. rotor 110, the frequency ratio of the electrical machine generators equals the pole count ratio of the electrical machine generators. For example, if AC power with a 60-hertz frequency is necessary for first AC power bus 20 and AC power with a 400-hertz frequency is necessary for second AC power bus 30, a pole count ratio of 400:60, i.e. about 6.7, is necessary. Since each pole-pair count must be integer, the frequency ratio is necessarily a ratio of integers. The pole count ratio can then be scaled in view of the rotational speed provided by a prime mover, e.g. prime mover 12, coupled to the power conversion apparatus, e.g. power conversion apparatus 100/200. For example, this can provide AC power suitable for certain types of vehicles having more than one AC power frequency need, such as terrestrial vehicles having power-consuming devices requiring conventional 60 hertz AC power and specialized, high-power power-consuming devices requiring 400 hertz AC power, without requiring additional power conversion circuitry or a separate mechanical power conversion device.

In embodiments, power conversion apparatus 100/200 is a switched reluctance power conversion apparatus. The switched reluctance power conversion apparatus is a doubly salient pole machine with stator protruding pole portions and rotor protruding pole portions respectively constructed from suitable magnetically permeable material, such as ferrite. In the first electrical machine, the stator protruding pole portions extend radially outward with respect to rotational axis A and the rotor protruding pole portions extend radially inward. In the second electrical machine, the stator protruding pole portions extend radially inward and the rotor protruding pole portions extend radially outward. As with the embodiments above, the first and second electrical machines would axially overlap one another. It is contemplated that the stator protruding pole portions extend a sufficient radial distance to each accommodate a stator winding that, when coupled to a current source, individually magnetizes the protruding pole portions. Selectively switching current flow through the stator windings of the first and second electrical machines excites the protruding stator pole portions, creating a magnetic field as the rotor poles move out of alignment with the stator poles. This causes the stator to impede rotation of the rotor and extract power from the rotor, thereby converting mechanical energy from the rotor into electrical power in the stator windings. The electrical power of the stator windings of each of the first and second electrical machines differs in frequency as a function of the differences of the distribution of the protruding pole portions.

The methods and systems of the present disclosure, as described above and shown in the drawings, provide for electrical machine generators with superior properties including coincident generation of AC power with different frequencies. While the apparatus and methods of the subject disclosure have been shown and described with reference to preferred embodiments, those skilled in the art will readily appreciate that changes and/or modifications may be made thereto without departing from the scope of the subject disclosure.

## Claims

1. A power conversion apparatus, comprising:
a first electrical machine (140), including:
a first rotor portion (142); and
a first stator portion (144) electromagnetically coupled to the first rotor portion (142); and
a second electrical machine (160), including:
a second rotor portion (162); and
a second stator portion (164) electromagnetically coupled to the second rotor portion (162), wherein the first rotor portion (142) is coupled to the second rotor portion (162) at a shared axial position for common rotation therewith about an axis of the power conversion apparatus.

2. An apparatus as recited in claim 1, further including:
a first alternating current power lead (120) connected to the first stator portion (144); and
a second alternating current power lead (130) connected to the second stator portion (164).

3. An apparatus as recited in claim 2, wherein the first rotor portion (142) includes a first plurality of permanent magnet elements (146) and the second rotor portion (162) includes a second plurality of permanent magnet elements (166).

4. An apparatus as recited in claim 3, wherein the second plurality of permanent magnet elements (166) has a greater number of permanent magnet elements than the first plurality of permanent magnet elements (146) for supplying higher frequency alternating current power to the second alternating current lead (130) than to the first alternating current lead (120).

5. An apparatus as recited claim 2, wherein the first stator portion (144) includes a winding (148) electrically connected to the first alternating current lead (120) and disposed radially inward of the first rotor portion (142) and second electrical machine (160).

6. An apparatus as recited in claim 2, wherein the second stator portion (164) includes a winding (168) electrically connected to the second alternating current lead (130) and disposed radially outward from the second rotor portion (162) and first electrical machine (140).

7. An apparatus as recited in claim 1, further including a stator support structure (102) supporting the first stator portion (144) and the second stator portion (164), wherein the stator support structure (102) defines therein a first gap (150) separating the first rotor portion (142) from the first stator portion (144) and a second gap (170) separating the second rotor portion (162) from the second stator portion (164), the second gap axially overlaying the first gap.

8. An apparatus as recited in claim 7, wherein the first gap (150) has a first gap axial length and the second gap (170) has a second gap axial length, the second axial gap length overlaying at least the entire length of the first axial gap length.

9. An apparatus as recited in claim 8, wherein the second axial gap length is greater than the first axial gap length.

10. An apparatus as recited in claim 1, further including a rotor with a dogleg radial profile supporting the first rotor portion (142) and the second rotor portion (162).

11. An apparatus as recited in claim 10, wherein the rotor includes an on-axis segment extending along the rotational axis, an off-axis segment, and an angled segment connecting the off-axis segment to the on-axis segment.

12. An apparatus as recited in claim 11, wherein the first rotor portion (142) is disposed over a radially inner surface of the off-axis segment and the second rotor portion (162) is disposed over a radially outer surface of the off-axis segment.

13. An apparatus as recited in claim 11, wherein the off-axis segment includes a backiron portion forming a portion of both the first electrical machine (140) and the second electrical machine (160).

14. An apparatus as recited in claim 13, wherein the first electrical machine (140) defines a first magnetic circuit and the second electrical machine (160) defines a second magnetic circuit, the backiron portion of the rotor completing the first magnetic circuit and the second magnetic circuit.

15. A dual-frequency generator, comprising:
a first electrical machine (140) disposed about a rotational axis, including:
a first plurality of permanent magnet elements (146) rotatable about the rotational axis;
at least one first winding (148) fixed in relation to the first plurality of permanent magnet elements (146) and electromagnetically coupled to the first plurality of permanent magnet elements (146); and
a first AC lead (120) electrically connected to the at least one first winding (148);
a second electrical machine (160) disposed radially outward of the first electrical machine (140) in relation to the rotational axis, including:
a second plurality of permanent magnet elements (166) connected to the first plurality of permanent magnet elements (146);
at least one second winding (168) fixed in relation to the second plurality of permanent magnet elements (166) and electromagnetically coupled to the second plurality of permanent magnet elements (166); and
a second AC lead (130) connected to the at least one second winding (168),
wherein the second plurality of permanent magnet elements (166) is greater than the first plurality of permanent magnet elements (146) such that concerted rotation of the first and second plurality of permanent magnet elements about the rotational axis coincidently induces an AC voltage differential across the at least one second winding (168) having a frequency that is greater than a frequency of an AC voltage differential induced across the at least one first winding (148).
